(19) Europäisches Patentamt

European Patent Office

Office européen des brevets

(11) **EP 3 512 130 A1**

(12) **EUROPEAN PATENT APPLICATION**

(43) Date of publication:
**17.07.2019 Bulletin 2019/29**

(51) Int Cl.:
**H04B 17/391** *(2015.01)*

(21) Application number: **18150922.5**

(22) Date of filing: **10.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Rohde & Schwarz GmbH & Co. KG 81671 München (DE)**

(72) Inventor: **Schmidt, Stefan 81827 München (DE)**

(74) Representative: **Körfer, Thomas et al Mitscherlich PartmbB Patent- und Rechtsanwälte Sonnenstrasse 33 80331 München (DE)**

(54) **MEASURING DEVICE AND METHOD WITH EFFICIENT CHANNEL SIMULATION**

(57) A measuring device (1) comprising a channel simulator (11) is provided. The channel simulator (11) is adapted to simulate multipath propagation by modifying a first measuring signal (13), using a plurality of taps defined by tap parameters ($\tau_{mod}$, $h_{mod}$), resulting in a second measuring signal (14). The measuring device (1) moreover comprises a parameter modifier (30), adapted to modify input tap parameters ($\tau$, h), resulting in the tap parameters ($\tau_{mod}$, $h_{mod}$).

Fig. 5

EP 3 512 130 A1

**Description**

The invention relates to simulating a transmission channel in high frequency communications systems.

In mobile radio standards such as LTE, GSM, WCDMA etc. or NR (New Radio) (5G), performance requirements for BS (base station) and UEs (user equipment) are defined under certain channel conditions.

Thus, there is a high demand from both UE and BS vendors for channel simulators. Channel simulators are available as independent devices that can be integrated into the test setup or they can be part of the test device as independent hardware resource.

For NR, a generic channel model has been defined. The defined tap delays have a time resolution of pico seconds [ps]. Simulating the delays with a time resolution of pico seconds results in very high demands on the channel simulator.

For example, the US patent US 7,852,912 B2 shows an equalizer system with conventional channel simulator.

Accordingly, the object of the invention is to provide a measuring device and measuring method, which allow a simulation of propagation channels with a reduced hardware requirement.

The object is solved by the features of claim 1 for the device and by the features of claim 11 for the method. Further it is solved by the features of claims 14 and 15 for the associated computer program and computer program product. The dependent claims contain further developments.

According to a first aspect of the invention, a measuring device comprising a channel simulator is provided. The channel simulator is adapted to simulate multipath propagation by modifying a first measuring signal, using a plurality of taps defined by tap parameters, resulting in a second measuring signal. The measuring device moreover comprises a parameter modifier, adapted to modify input tap parameters, resulting in the tap parameters. By accordingly modifying the input tap parameters, it is possible to build the measuring device using simpler hardware components.

Preferably, the parameter modifier is adapted to modify the input tap parameters by rounding tap delay values and/or by combining taps, resulting in the tap parameters. By use of these two measures, the time resolution, on which the measuring device needs to operate, is significantly reduced, which allows a significant reduction in hardware complexity.

Further advantageously, the measuring device additionally comprises a signal generator, adapted to generate the first measuring signal, or a signal interface, adapted to receive the first measuring signal. The measuring device is moreover optionally adapted to provide the second measuring signal to a device under test. This allows for performing the entire signal generation and channel simulation within the measuring device or alternatively for very flexibly receiving the first measuring signal from an external source. This increases the hardware flexibility, significantly.

Further advantageously, the parameter modifier is adapted to modify the input tap parameters by rounding tap delay values and/or by combining taps, taking a capability of the device under test defined by a capability parameter into account, resulting in the tap parameters. It is no use to provide the second measuring signal with an accuracy that is higher than the accuracy of the device under test. Therefore, by taking the capability parameter of the device under test into account, it is possible to significantly reduce the hardware effort for generating the second measuring signal.

Advantageously, the measuring device further comprises a parameter storage, adapted to store the capability parameter of the device under test. The parameter modifier is then adapted to read the capability parameter of the device under test from the parameter storage. It is thereby assured that for a plurality of different devices under test, a correct signal generating accuracy is chosen.

Advantageously, the capability parameter of the device under test is a minimal time difference of events in a reception signal, the device under test can process. This minimal time difference corresponds to the time-resolution of the device under test. By using this capability parameter of the device under test, the time-resolution of performing the channel simulation can be set accordingly, which significantly reduces the effort for performing the channel simulation.

Advantageously, the parameter modifier is adapted to round tap delay values of the input tap parameters to natural number multiples of the minimal time difference of events in a reception signal, the device under test can process. Thereby, it is assured that the maximum testing resolution, which can be achieved with the present device under test, is actually achieved.

Further advantageously, if the rounding results in at least two taps having an identical rounded tap delay value, the parameter modifier is adapted to combine the at least two taps of identical rounded tap delay value. This further reduces the necessary hardware effort.

Advantageously, the parameter modifier is adapted to combine the at least two taps of identical delay values, by adding scattering parameter signals of the at least two taps of identical delay values. By this simple measure, a further reduction in hardware effort is achieved.

Advantageously, the channel simulator comprises a plurality of taps. Each of the plurality of taps comprises a delay element, each adapted to delay the first measuring signal by a tap-specific tap delay value, resulting in a delayed first measuring signal, for each of the taps. Each of the taps moreover comprises a multiplier, which is adapted to multiply the delayed first measuring signal of the respective tap with a tap-specific scattering parameter signal, resulting in a tap output signal for each of the taps. The channel simulator moreover comprises an adder, which is adapted to add all tap output signals, resulting in the second measuring signal. A very simple generation of the second measuring signal is thereby achieved.

According to a second aspect of the invention, a measuring method for simulating a transmission of a first measuring signal through a transmission channel, resulting in a second measuring signal is provided. The method comprises receiving input tap parameters, modifying the input tap parameters, resulting in tap parameters, and simulating multipath propagation by modifying the first measuring signal, using a plurality of taps defined by the tap parameters, resulting in the second measuring signal. This significantly reduces the hardware requirements for performing the measurements.

An exemplary embodiment of the invention is now further explained by way of example only with respect to the drawings, in which

FIG. 1     shows an exemplary measuring device;

FIG. 2     shows an exemplary channel simulator;

FIG. 3     shows an embodiment of the inventive measuring device;

FIG. 4     shows a rounding of tap delay values as performed by the embodiment of the inventive measuring device;

FIG. 5     shows combined taps as used by the embodiment of the inventive measuring device, and

FIG. 6     shows an embodiment of the inventive measuring method, in a flow diagram.

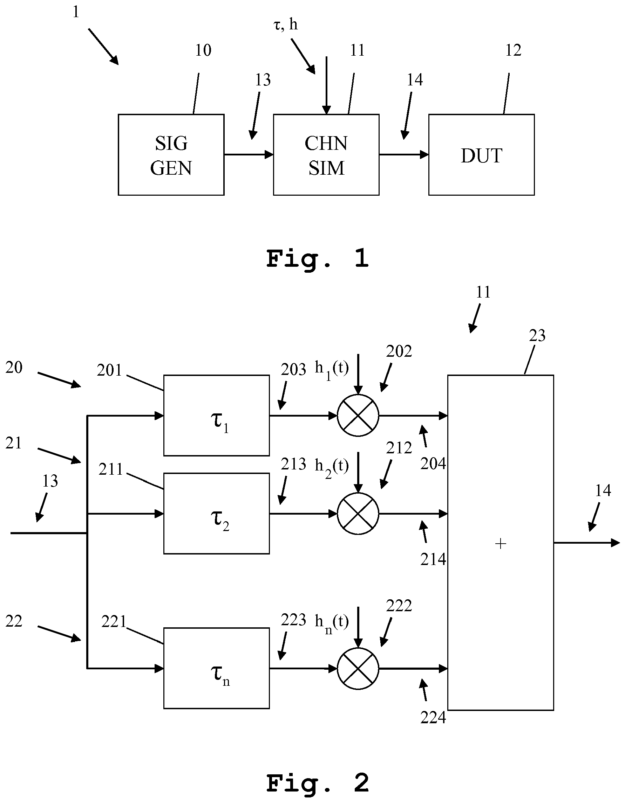

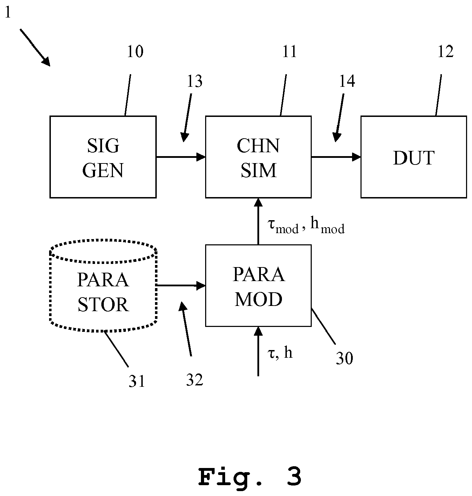

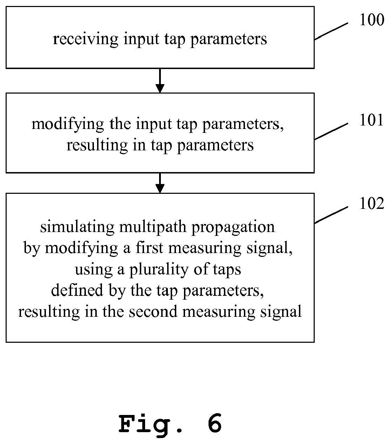

First, we demonstrate the general function of a measuring device including a channel simulator along FIG. 1 and FIG. 2. With regard to FIG. 3 - 5 the function of an embodiment of the inventive measuring device is shown in detail. Along FIG. 6, finally, the function of an embodiment of the inventive measuring method is described. Similar entities and reference numbers in different figures have been partially omitted.

In FIG. 1, a typical measuring device 1 is shown. The measuring device 1 here comprises a signal generator 10, which is connected to a channel simulator 11. The channel simulator 11 is connected to a device under test 12, which is not part of the measuring device 1.

The signal generator 10 generates a first measuring signal 13 and provides it to the channel simulator 11. The channel simulator 11 simulates a multipath propagation of the first measuring signal 13, resulting in a second measuring signal 14, which is provided to the device under test 12. The channel simulator 11 uses tap parameters $\tau$, h as inputs for defining the multipath propagation. While $\tau$ is the delay of a single tap, h is a scattering parameter signal. It is important to note that the tap parameters comprise different values of $\tau$ and h for each of the taps of the simulated multipath propagation.

Details of the channel simulator 11 are shown in FIG. 2. The channel simulator 11 comprises a plurality of taps 20, 21, 22. Each of the taps comprises a delay element 201, 211, 221 and a multiplier 202, 212, 222. The inputs of the delay elements 201, 211 and 221 are connected to the signal generator 10. The outputs of the delay elements 201, 211 and 221 are connected to inputs of the multipliers 202, 212 and 222. Outputs of the multipliers 202, 212 and 222 are connected to a single adder 23, which is connected to the device under test 12.

For performing a channel simulation, the first measuring signal 13 is provided to the delay elements 201, 211 and 221. Each of the delay elements 201, 211, 221 delays the first measuring signal 13 by its respective delay value $\tau_1$, $\tau_2$, $\tau_n$, resulting in delayed first measuring signals 203, 213, 223, which are provided to the multipliers 202, 212 and 222. Each multiplier 202, 212, 222 multiplies the respective delayed first measuring signal 203, 213, 223 with a scattering parameter signal $h_1(t)$, $h_2(t)$, $h_n(t)$, resulting in a tap output signal 204, 214, 224 for each of the taps 20, 21, 22. The tap output signals 204, 214, 224 are added up by the adder 23, resulting in the second measuring signal 14.

In a conventional channel simulator, used in a conventional measuring device or separately, the tap parameters $\tau$, h are set according to a specified communications standard. This results in very high hardware requirements imposed on the channel simulator. In many practical cases, this high hardware effort though is not necessary, since the device under test does not have a time resolution necessitating such accurate measuring signal generation. Therefore, it is not necessary that a channel simulator generates delays with a time resolution that is higher than that of the UE.

The time resolution $\Delta T$ of the UE is given through its signal processing bandwidth BW, i.e.

$$\Delta T = \frac{1}{BW}$$

In Fig. 3, a channel simulator that simulates the tap delays as multiples of $\Delta T$ is shown.

The measuring device 1 according to an embodiment of the present invention, shown in FIG. 3, comprises a signal generator 10, connected to a channel simulator 11. Moreover, the measuring device comprises a parameter modifier 30, which is also connected to the channel simulator 11. The measuring device moreover comprises, as an optional component, a parameter storage 31, which is also connected to the parameter modifier 30. As already shown in FIG. 1, also here, the channel simulator 11 is connected to a device under test 12, which is not part of the measuring device 1.

When performing a measurement, the parameter modifier 30 receives input tap parameters $\tau$, h and modifies them to generate tap parameters $\tau_{\text{mod}}$, $h_{\text{mod}}$. These tap parameters $\tau_{\text{mod}}$, $h_{\text{mod}}$ are provided to the channel simulator 11. The signal generator 10 generates a first measuring signal 13, which is provided to the channel simulator 11. The channel simulator 11 now uses the tap parameters $\tau_{\text{mod}}$, $h_{\text{mod}}$ for performing the channel simulation, as shown along FIG. 2. It is important to note that the tap parameters $\tau_{\text{mod}}$, $h_{\text{mod}}$ require lower hardware effort than the input tap parameters $\tau$, h.

In the following, some details of how the modification of the input tap parameters $\tau$, h in order to achieve the tap parameters $\tau_{\text{mod}}$, $h_{\text{mod}}$, is shown:

**Channel impulse response**

A channel simulator simulates the channel impulse response.

A time variant channel impulse response $h(\tau,t)$ with $N_{\text{tap}}$ taps can be written as:

$$h(\tau,t) = \sum_{k=1}^{N_{tap}} \sigma_k(t) * x_k(t) * \delta\big(\tau - \tau_k(t)\big)$$

where

$$\delta(t) = \begin{cases} 1, & t = 0 \\ 0, & t \neq 0 \end{cases}$$

is the delta function and $\sigma_k^2(t)$ and $\tau_k(t)$ are the variance and the delay of tap k respectively.

$x_k(t)$ is without loss of generality a complex function of time t with unit variance, i.e.

$$var\big(x_k(t)\big) = E\big(x_k(t) * x_k^*(t)\big) = 1$$

where $E(\ )$ is the expectation operator.

In most applications $\sigma_k(t)$ and $\tau_k(t)$ do not vary in time. Then we have

$$h(\tau,t) = \sum_{k=1}^{N_{tap}} \sigma_k * x_k(t) * \delta(\tau - \tau_k)$$

**Rounding the delays**

Taps that are closer in time than $\Delta T$ cannot be distinguished from the UE. Thus it is sufficient to simulate each tap with a delay that lies on the delay grid given as:

$$n * \Delta T$$

with $n \in \mathbb{N}_0$

where $\mathbb{N}_0$ denotes the natural numbers including 0.

If a test specification defines a delay for tap k, i.e. $\tau_k$, that does not lie on the delay grid, i.e.

$$\tau_k \neq n * \Delta T$$

then $\tau_k$ should be replaced with the closest delay $\tau'_k$ on the delay grid, i.e. define

$$n_k = \underset{n}{\mathrm{argmin}} |n * \Delta T - \tau_k|$$

then

$$\tau_{mod,k} = n_k * \Delta T$$

Example

Assume that $\Delta T = 5\ ns$ and the test specification defines the following power delay profile:

Table 1: Power delay profile defined from test specification

| Tap k | $\sigma_k$ | $\tau_k$ [ns] |
|-------|-----------|---------------|
| 1 | $\sigma_1$ | 0 |
| 2 | $\sigma_2$ | 6 |
| 3 | $\sigma_3$ | 9 |
| 4 | $\sigma_4$ | 15 |

The power delay profile implemented in the channel simulator 11 would then be:

Table 2: Power delay profile implemented from channel simulator

| Tap k | $\sigma_k$ | $\tau_{mod,k}$ [ns] |
|-------|-----------|---------------------|
| 1 | $\sigma_1$ | 0 |
| 2 | $\sigma_2$ | 5 |
| 3 | $\sigma_3$ | 10 |
| 4 | $\sigma_4$ | 15 |

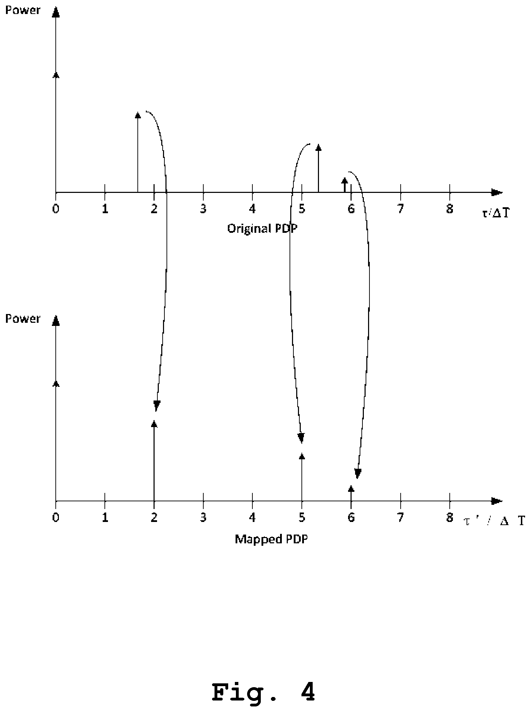

Such a rounding of tap delay values is shown in FIG. 4. In the top part of FIG. 4, the original power delay profile of the channel simulation is shown. On the x-axis, the timing of the individual taps is shown, while on the y-axis, the respective power is depicted. Here, it can be seen that the timing of the individual taps does not lie on natural number multiples of the minimum time resolution $\Delta T$ of the device under test.

In the lower part of FIG. 4, the power delay profile after rounding is shown. It can clearly be seen that now the timing of all taps is set to a natural number multiples of the minimum time difference of events detectable by the device under test $\Delta T$.

**Combination of taps**

If rounding is performed as shown before, it may happen that two or more taps fall onto the same delay. Those taps can then be combined to a single tap.

We will consider two examples here:

    1. $x_k(t)$ is implemented as random process

2. $x_k(t)$ is implemented as a sum of sinusoids (SOS)

Random process

Consider $x_k(t)$ being implemented as random process.

Assume that after rounding K taps falls onto the same delay. Without loss of generality we number them with $1 \leq k \leq K$, i.e.

$$\tau_{mod,1} = \tau_{mod,2} = \cdots = \tau_{mod,k} = \tau$$

Those K taps will then be combined to a single tap with power $\sigma^2$ :

$$\sigma^2 = \sum_{k=1}^{K} \sigma_k^2$$

and delay $\tau$.

Example

Assume that $\Delta T = 5$ *ns* and the test specification defines the following power delay profile:

Table 3: Power delay profile defined from test specification

| Tap k | $\sigma_k$ | $\tau_k$ [ns] |
|---|---|---|
| 1 | $\sigma_1$ | 0 |
| 2 | $\sigma_2$ | 4 |
| 3 | $\sigma_3$ | 5 |
| 4 | $\sigma_4$ | 6 |
| 5 | $\sigma_5$ | 10 |

After rounding of delays one obtains:

Table 4: Power delay profile after rounding of delays

| Tap k | $\sigma_k$ | $\tau_{mod,k}$ [ns] |
|---|---|---|
| 1 | $\sigma_1$ | 0 |
| 2 | $\sigma_2$ | 5 |
| 3 | $\sigma_3$ | 5 |
| 4 | $\sigma_4$ | 5 |
| 5 | $\sigma_5$ | 10 |

After combination of taps one obtains

Table: Power delay profile after combination of taps and implemented in channel simulator

| Tap k | $\sigma_k$ | $\tau'_k$ [ns] |
|---|---|---|
| 1 | $\sigma_1$ | 0 |
| 2 | $\sqrt{\sigma_2^2 + \sigma_3^2 + \sigma_4^2}$ | 5 |

(continued)

| Tap k | $\sigma_k$ | $\tau'_k$ [ns] |
|---|---|---|
| 3 | $\sigma_5$ | 10 |

And thus the impulse response is given as:

$$h(\tau,t) = \sigma_1 * x_1(t) * \delta(\tau) + \sqrt{\sigma_2^2 + \sigma_3^2 + \sigma_4^2} * x_2(t) * \delta(\tau - 5ns) + \sigma_5 * x_3(t) * \delta(\tau - 10ns)$$

where $x_1(t)$, $x_2(t)$ and $x_3(t)$ are independent random processes with unit variance.

Sum of sinusoids

Consider $x_k(t)$ being implemented as sum of sinusoids (SOS), i.e.

$$x_k(t) = \sum_{i=1}^{N_k^{subpath}} a_{k,i} * exp\left(j * 2 * \pi * f_{k,i} * t\right)$$

where $N_k^{subpath}$ is the number of subpaths (= sinusoids) of tap k, $a_{k,i}$ is the complex amplitude and $f_{k,i}$ is the frequency of subpath $i$ and tap k, respectively.

Assume that after rounding K taps falls onto the same delay. Without loss of generality we number them with $1 \le k \le K$, i.e.

$$\tau'_1 = \tau'_2 = \cdots = \tau'_K = \tau$$

The original K taps, i.e.

$$\sigma_k * x_k(t) * \delta(\tau - \tau_k) \quad \text{for } 1 \le k \le K$$

will then be combined to a single tap

$$x(t) * \delta(\tau - \tau)$$

with

$$x(t) = \sum_{k=1}^{K} \sigma_k * x_k(t) = \sum_{k=1}^{K} \sum_{i=1}^{N_k^{subpath}} \sigma_k * a_{k,i} * exp\left(j * 2 * \pi * f_{k,i} * t\right)$$

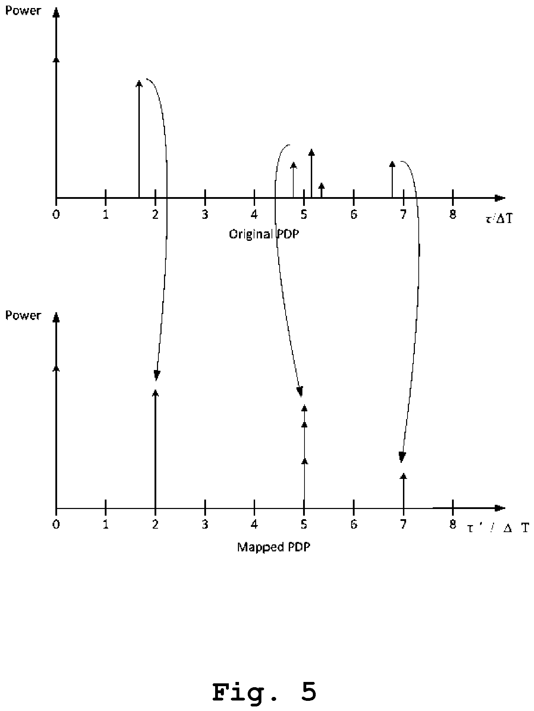

Such a combining of taps is shown in FIG. 5. While in the top part of FIG. 5, the original situation of the power delay profile before rounding and combining is shown. It can be seen that the tap with timing approximately 1.7 is rounded to a delay of 2. The taps with timings at 4.8, 5.1 and 5.3 are all rounded to a delay of 5 and combined into a single tap. The tap with a delay of 6.8 is rounded to a delay of 7.

Finally, in FIG. 6, an embodiment of the inventive measuring method is shown. In a first step 100 input tap parameters are received. In a second step 101, the input tap parameters are modified, so as to achieve the resulting tap parameters. In a final step 102, a multipath propagation is simulated by modifying a first measuring signal, using a plurality of taps, defined by the tap parameters, resulting in the second measuring signal.

The invention is not limited to the examples and especially not to a measuring device comprising a signal generator. The channel simulator can operate as a stand alone measuring device as well. The characteristics of the exemplary embodiments can be implemented in any advantageous combination of the features claimed in the claims, described in the description or drawn in the drawings.

**Claims**

1.  Measuring device (1) comprising a channel simulator (11), adapted to simulate multipath propagation by modifying a first measuring signal (13), using a plurality of taps (20, 21, 22) defined by tap parameters ($\tau_{mod}$, $h_{mod}$), resulting in a second measuring signal (14),
    wherein the measuring device (1) comprises a parameter modifier (30), adapted to modify input tap parameters ($\tau$, h), resulting in the tap parameters ($\tau_{mod}$, $h_{mod}$).

2.  Measuring device according to claim 1,
    wherein the parameter modifier (30) is adapted to modify the input tap parameters ($\tau$, h) by rounding tap delay values ($\tau$) and/or by combining taps (20, 21, 22), resulting in the tap parameters ($\tau_{mod}$, $h_{mod}$).

3.  Measuring device according to claim 1 or 2,
    wherein the measuring device (1) further comprises a signal generator (10), adapted to generate the first measuring signal (13), or a signal interface, adapted to receive the first measuring signal (13), and/or
    wherein the measuring device (1) is adapted to provide the second measuring signal (14) to a device under test (12).

4.  Measuring device according to claim 3,
    wherein the parameter modifier (30) is adapted to modify the input tap parameters ($\tau$, h) by rounding tap delay values ($\tau$) and/or by combining taps (20, 21, 22), taking a capability of the device under test (12) defined by a capability parameter into account, resulting in the tap parameters ($\tau_{mod}$, $h_{mod}$).

5.  Measuring device according to claim 4,
    wherein the measuring device (1) further comprises a parameter storage (31), adapted to store the capability parameter of the device under test (12), and
    wherein the parameter modifier (30) is adapted to read the capability parameter of the device under test (12) from the parameter storage (31).

6.  Measuring device according to claim 4 or 5,
    wherein the capability parameter of the device under test (12) is a minimal time difference ($\Delta T$) of events in a reception signal, the device under test (12) can process.

7.  Measuring device according to claim 6,
    wherein the parameter modifier (30) is adapted to round tap delay values ($\tau$) of the input tap parameters ($\tau$, h) to natural number multiples of the minimal time difference ($\Delta T$) of events in a reception signal, the device under test (12) can process.

8.  Measuring device according to claim 7,
    wherein if the rounding results in at least two taps (20, 21, 22) having an identical rounded tap delay value ($\tau_{mod}$), the parameter modifier (30) is adapted to combine the at least two taps (20, 21, 22) of identical rounded tap delay value ($\tau_{mod}$).

9.  Measuring device according to claim 8,
    wherein the parameter modifier (30) is adapted to combine the at least two taps (20, 21, 22) of identical rounded tap delay values ($\tau_{mod}$), by adding scattering parameter (h) signals of the at least two taps (20, 21, 22) of identical delay values.

10. Measuring device according to any of the claims 1 to 9,
    wherein the channel simulator (11) comprises a plurality of taps (20, 21, 22),
    wherein each of the plurality of taps (20, 21, 22) comprises a delay element (201, 211, 221), each adapted to delay the first measuring signal (13) by a tap-specific tap delay value ($\tau_1$, $\tau_2$, $\tau_n$), resulting in a delayed first measuring signal (203, 213, 223), for each of the taps (20, 21, 22),
    wherein each of the taps (20, 21, 22) comprises a multiplier (202, 212, 222), adapted to multiply the delayed first measuring signal (203, 213, 223) of the respective tap (20, 21, 22) with a tap-specific scattering parameter signal ($h_1(t)$, $h_2(t)$, $h_n(t)$), resulting in a tap output signal (204, 214, 224) for each of the taps (20, 21, 22), and wherein the channel simulator (11) comprises an adder (23), adapted to add all tap output signals (204, 214, 224), resulting in the second measuring signal (14).

11. Measuring method for simulating a transmission of a first measuring signal (13) through a transmission channel, resulting in a second measuring signal (14), comprising the following steps:

- receiving (100) input tap parameters ($\tau$, h),
- modifying (101) the input tap parameters ($\tau$, h), resulting in tap parameters ($\tau_{mod}$, $h_{mod}$), and
- simulating (102) multipath propagation by modifying the first measuring signal (13), using a plurality of taps (20, 21, 22) defined by the tap parameters ($\tau_{mod}$, $h_{mod}$), resulting in the second measuring signal (14).

12. Measuring method according to claim 11, wherein the method comprises modifying the input tap parameters ($\tau$, h) by rounding tap delay values ($\tau$) and/or by combining taps (20, 21, 22), resulting in the tap parameters ($\tau_{mod}$, $h_{mod}$).

13. Measuring device according to claim 12, wherein the input tap parameters ($\tau$, h) are modified by rounding tap delay values ($\tau$) and/or by combining taps (20, 21, 22), taking a capability of a device under test (12), the second measuring signal (14) is provided to, defined by a capability parameter, into account, resulting in the tap parameters ($\tau_{mod}$, $h_{mod}$).

14. A computer program with program code means for performing all steps according to any of the claims 11 to 13 if the program is executed on a computer or a digital signal processor.

15. A computer program product having a computer readable medium with stored program code means for performing all steps according to any of the claims 11 to 13 if the program is executed on a computer or a digital signal processor.

**Amended claims in accordance with Rule 137(2) EPC.**

1. Measuring device (1) comprising a channel simulator (11), adapted to simulate multipath propagation by modifying a first measuring signal (13), using a plurality of taps (20, 21, 22) defined by tap parameters ($\tau_{mod}$, $h_{mod}$), resulting in a second measuring signal (14), wherein the measuring device (1) comprises a parameter modifier (30), adapted to modify input tap parameters ($\tau$, h), resulting in the tap parameters ($\tau_{mod}$, $h_{mod}$), wherein the measuring device (1) further comprises a signal generator (10), adapted to generate the first measuring signal (13), or a signal interface, adapted to receive the first measuring signal (13), and/or wherein the measuring device (1) is adapted to provide the second measuring signal (14) to a device under test (12), wherein the parameter modifier (30) is adapted to modify the input tap parameters ($\tau$, h) by rounding tap delay values ($\tau$) and/or by combining taps (20, 21, 22), taking a capability of the device under test (12) defined by a capability parameter into account, resulting in the tap parameters ($\tau_{mod}$, $h_{mod}$), wherein the measuring device (1) further comprises a parameter storage (31), adapted to store the capability parameter of the device under test (12), and wherein the parameter modifier (30) is adapted to read the capability parameter of the device under test (12) from the parameter storage (31).

2. Measuring device according to claim 1, wherein the parameter modifier (30) is adapted to modify the input tap parameters ($\tau$, h) by rounding tap delay values ($\tau$) and/or by combining taps (20, 21, 22), resulting in the tap parameters ($\tau_{mod}$, $h_{mod}$).

3. Measuring device according to claim 1 or 2, wherein the capability parameter of the device under test (12) is a minimal time difference ($\Delta T$) of events in a reception signal, the device under test (12) can process.

4. Measuring device according to claim 3, wherein the parameter modifier (30) is adapted to round tap delay values ($\tau$) of the input tap parameters ($\tau$, h) to natural number multiples of the minimal time difference ($\Delta T$) of events in a reception signal, the device under test (12) can process.

5. Measuring device according to claim 4,
wherein if the rounding results in at least two taps (20, 21, 22) having an identical rounded tap delay value ($\tau_{mod}$), the parameter modifier (30) is adapted to combine the at least two taps (20, 21, 22) of identical rounded tap delay value ($\tau_{mod}$).

6. Measuring device according to claim 5,
wherein each of the taps (20, 21, 22) comprises a multiplier (202, 212, 222), adapted to multiply the delayed first measuring signal (203, 213, 223) of the respective tap (20, 21, 22) with a tap-specific scattering parameter signal ($h_1(t)$, $h_2(t)$, $h_n(t)$), resulting in a tap output signal (204, 214, 224) for each of the taps (20, 21, 22), and
wherein the parameter modifier (30) is adapted to combine the at least two taps (20, 21, 22) of identical rounded tap delay values ($\tau_{mod}$), by adding scattering parameter (h) signals of the at least two taps (20, 21, 22) of identical delay values.

7. Measuring device according to any of the claims 1 to 6,
wherein the channel simulator (11) comprises a plurality of taps (20, 21, 22),
wherein each of the plurality of taps (20, 21, 22) comprises a delay element (201, 211, 221), each adapted to delay the first measuring signal (13) by a tap-specific tap delay value ($\tau_1$, $\tau_2$, $\tau_n$), resulting in a delayed first measuring signal (203, 213, 223), for each of the taps (20, 21, 22),
wherein each of the taps (20, 21, 22) comprises a multiplier (202, 212, 222), adapted to multiply the delayed first measuring signal (203, 213, 223) of the respective tap (20, 21, 22) with a tap-specific scattering parameter signal ($h_1(t)$, $h_2(t)$, $h_n(t)$), resulting in a tap output signal (204, 214, 224) for each of the taps (20, 21, 22), and
wherein the channel simulator (11) comprises an adder (23), adapted to add all tap output signals (204, 214, 224), resulting in the second measuring signal (14).

8. Measuring method for simulating a transmission of a first measuring signal (13) through a transmission channel, resulting in a second measuring signal (14), comprising the following steps:

- receiving (100) input tap parameters ($\tau$, h),
- modifying (101) the input tap parameters ($\tau$, h), resulting in tap parameters ($\tau_{mod}$, $h_{mod}$), and
- simulating (102) multipath propagation by modifying the first measuring signal (13), using a plurality of taps (20, 21, 22) defined by the tap parameters ($\tau_{mod}$, $h_{mod}$), resulting in the second measuring signal (14),

wherein the measuring method further comprises generating the first measuring signal (13), or receiving the first measuring signal (13), and/or providing the second measuring signal (14) to a device under test (12),
wherein the measuring method further comprises modifying the input tap parameters ($\tau$, h) by rounding tap delay values ($\tau$) and/or by combining taps (20, 21, 22), taking a capability of the device under test (12) defined by a capability parameter into account, resulting in the tap parameters ($\tau_{mod}$, $h_{mod}$),
wherein the measuring method further comprises storing the capability parameter of the device under test (12) in a parameter storage (31), and
reading the capability parameter of the device under test (12) from the parameter storage (31).

9. Measuring method according to claim 8,
wherein the method comprises modifying the input tap parameters ($\tau$, h) by rounding tap delay values ($\tau$) and/or by combining taps (20, 21, 22), resulting in the tap parameters ($\tau_{mod}$, $h_{mod}$).

10. Measuring device according to claim 9,
wherein the input tap parameters ($\tau$, h) are modified by rounding tap delay values ($\tau$) and/or by combining taps (20, 21, 22), taking a capability of a device under test (12), the second measuring signal (14) is provided to, defined by a capability parameter, into account, resulting in the tap parameters ($\tau_{mod}$, $h_{mod}$).

11. A computer program with program code means for performing all steps according to any of the claims 8 to 10 if the program is executed on a computer or a digital signal processor.

12. A computer program product having a computer readable medium with stored program code means for performing all steps according to any of the claims 8 to 10 if the program is executed on a computer or a digital signal processor.

Fig. 1

Fig. 2

Fig. 3

Fig. 4

**Fig. 5**

```
┌─────────────────────────────────────────┐
│                                         │      100
│       receiving input tap parameters    │    ╱
│                                         │
└─────────────────────────────────────────┘
                    │
                    ▼
┌─────────────────────────────────────────┐
│     modifying the input tap parameters, │      101
│         resulting in tap parameters     │    ╱
└─────────────────────────────────────────┘
                    │
                    ▼
┌─────────────────────────────────────────┐
│                                         │      102
│      simulating multipath propagation   │    ╱
│   by modifying a first measuring signal,│
│          using a plurality of taps      │
│         defined by the tap parameters,  │
│  resulting in the second measuring signal│
└─────────────────────────────────────────┘
```

# Fig. 6

Europäisches
Patentamt

European
Patent Office

Office européen
des brevets

## EUROPEAN SEARCH REPORT

Application Number

EP 18 15 0922

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SPIRENT COMMUNICATIONS: "Channel Modelling for RAN4 RRM and Demodulation Testing", 3GPP DRAFT; R4-1707348, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Berlin,Germany; 20170821 - 20170825 20 August 2017 (2017-08-20), XP051320577, Retrieved from the Internet: URL:http://www.3gpp.org/ftp/Meetings_3GPP_SYNC/RAN4/Docs/ [retrieved on 2017-08-20] * section 1, "Introduction" * * section 2, paragraph "System BW Effects" * ----- | 1-15 | INV. H04B17/391 |
| X A | DE 10 2009 049415 A1 (DEUTSCH ZENTR LUFT & RAUMFAHRT [DE]) 22 April 2010 (2010-04-22) * paragraph [0002] - paragraph [0005] * * paragraph [0008] - paragraph [0014] * ----- -/-- | 1-7, 10-15 8,9 | **TECHNICAL FIELDS SEARCHED (IPC)** H04B |

The present search report has been drawn up for all claims

| Place of search | Date of completion of the search | Examiner |
|---|---|---|
| The Hague | 29 June 2018 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

# EUROPEAN SEARCH REPORT

Application Number

EP 18 15 0922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SILVA J C ET AL: "Conversion of reference tapped delay line channel models to discrete time channel models [UMTS]", VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, 6 October 2003 (2003-10-06), pages 128-132Vol.1, XP010700814, DOI: 10.1109/VETECF.2003.1284992 ISBN: 978-0-7803-7954-1 * section II * * section III * * section V * | 1-15 | |
| A | "3 rd Generation Partnership Project; Technical Specification Group Radio Access Network; Study on channel model for frequencies from 0.5 to 100 GHz (Release 14)", 3GPP DRAFT; 38901-E30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 5 January 2018 (2018-01-05), XP051424492, Retrieved from the Internet: URL:http://www.3gpp.org/ftp/3guInternal/3G PP_ultimate_versions_to_be_transposed/dupl icatesNotSentToDpc/38901-e30.doc [retrieved on 2018-01-05] * section 7.7.2 * | 1-15 | TECHNICAL FIELDS SEARCHED (IPC) |

The present search report has been drawn up for all claims

| Place of search | Date of completion of the search | Examiner |
|---|---|---|
| The Hague | 29 June 2018 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 0922

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2018

| Patent document cited in search report | Publication date | Patent family member(s) | Publication date |
|---|---|---|---|
| DE 102009049415 A1 | 22-04-2010 | NONE | |

EPO FORM P0459

For more details about this annex : see Official Journal of the European Patent Office, No. 12/82

**EP 3 512 130 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 7852912 B2